# EUROPEAN PATENT APPLICATION

(11) **EP 4 421 631 A1**
(43) Date of publication of application: **28.08.2024**
(21) Application number: 22897501.7
(22) Date of filing: 24.10.2022
(51) Int. Cl.: G06F 9/455

(54) **DATA MIGRATION METHOD AND APPARATUS, AND ELECTRONIC DEVICE**

(30) Priority: 26.11.2021 CN 202111426045
(71) Applicant: Huawei Technologies Co., Ltd., Shenzhen, Guangdong 518129 (CN)
(72) Inventor: LU, Shengwen, Shenzhen, Guangdong 518129 (CN)
(74) Representative: MERH-IP Matias Erny Reichl Hoffmann Patentanwälte PartG mbB
(86) International application number: PCT/CN2022/127151
(87) International publication number: WO 2023/093418

(57) **Abstract**

A data migration method and apparatus, and an electronic device relate to the field of computer technologies. The data migration method includes: First, a network interface card of a source host obtains a data migration notification message, where the data migration notification message indicates an identifier of a to-be-migrated virtual machine. Then, the network interface card determines to-be-migrated data based on the identifier, where the to-be-migrated data is data that is stored in a memory of the source host and that is associated with the to-be-migrated virtual machine. Finally, the network interface card migrates the to-be-migrated data to a destination host. The to-be-migrated data is determined by the network interface card based on the identifier of the to-be-migrated virtual machine. This avoids a process in which the source host determines the to-be-migrated data of the virtual machine, reduces computing resources required by the source host in a live migration process of the virtual machine, and improves a capability of performing another service (for example, compute-intensive and latency-sensitive services such as AI and HPC) by the source host.

## Description

This application claims priority to Chinese Patent Application No. 202111426045.1, filed with the China National Intellectual Property Administration on November 26, 2021 and entitled "DATA MIGRATION METHOD AND APPARATUS, AND ELECTRONIC DEVICE", which is incorporated herein by reference in its entirety.

### TECHNICAL FIELD

This application relates to the field of computer technologies, and in particular, to a data migration method and apparatus, and an electronic device.

### BACKGROUND

A virtual machine (virtual machine, VM) is a virtual device obtained by virtualizing a physical computing resource, storage resource, and network resource by using a virtualization technology. A physical device that runs the virtual machine is referred to as a host machine. Because a hardware fault or the like occurs on the host machine, to ensure normal running of the virtual machine, a live migration technology is usually used to migrate the VM from a source host machine (which may be also referred to as a source host) to a destination host machine (which may be also referred to as a destination host), to implement dual-machine error tolerance or load balancing of hardware. To ensure service continuity, the live migration technology needs to include migration of data in a memory of the VM. This involves processing of data in a dirty page in a memory. The dirty page is storage space in which the data in the memory is modified. Usually, a processor of the source host performs live migration processing, including identifying the dirty page, migrating the data in the dirty page, and indicating a network interface card to send the data in the dirty page to the destination host. The foregoing process completely depends on a processing capability and input/output (input/output, I/O) bandwidth of the processor of the source host. For deployment of compute-intensive and latency-sensitive services such as artificial intelligence (artificial intelligence, AI) and high-performance computing (high-performance computing, HPC), an existing solution cannot meet a service performance requirement. Therefore, how to provide a more efficient data migration method becomes a technical problem to be urgently resolved.

### SUMMARY

This application provides a data migration method and apparatus, and an electronic device, to resolve a problem that service performance of a source host is reduced in a process of data migration of a virtual machine.

According to a first aspect, a data migration method is provided. The data migration method may be applied to a source host or a physical device that supports implementation of the data migration method. For example, the physical device includes a chip system. For example, the source host includes a memory and a network interface card. The data migration method is performed by the network interface card of the source host, and the data migration method includes: First, the network interface card of the source host obtains a first data migration notification message, where the first data migration notification message indicates an identifier of a to-be-migrated virtual machine. Then, the network interface card of the source host determines to-be-migrated data based on the identifier, where the to-be-migrated data is data that is stored in the memory of the source host and that is associated with the to-be-migrated virtual machine. Finally, the network interface card of the source host migrates the to-be-migrated data to a destination host.

In this application, the to-be-migrated data is determined by the network interface card based on the identifier of the to-be-migrated virtual machine. This avoids a process in which the source host determines the to-be-migrated data of the virtual machine, reduces a computing resource required by the source host in a live migration process of the virtual machine, and improves a capability of performing another service (for example, compute-intensive and latency-sensitive services such as AI and HPC) by the source host.

In an optional implementation, that the network interface card determines the to-be-migrated data based on the identifier includes: The network interface card determines, based on the identifier, a memory page set that is in the memory of the source host and that is associated with the to-be-migrated virtual machine, and uses, as the to-be-migrated data, data stored in the memory page set. The memory page set includes one or more memory pages. The network interface card determines the to-be-migrated data based on the identifier of the to-be-migrated virtual machine. This avoids performance degradation of the source host caused because a processor of the source host determines the to-be-migrated data, improves a capability of processing another service by the source host, and reduces freezing of the source host.

In another optional implementation, the to-be-migrated data provided in the foregoing embodiment includes dirty page data, and the dirty page data is data stored in a memory page that is in the one or more memory pages and in which data is modified.

In another optional implementation, that the network interface card determines, based on the identifier, dirty page data included in the to-be-migrated data includes: The network interface card queries dirty page mark information stored in the network interface card, to determine a dirty page set associated with the identifier. Then, the network interface card uses, as the dirty page data, data stored in the dirty page set. The dirty page set includes one or more dirty pages, the dirty page is the memory page that is in the one or more memory pages and in which the data is modified, and the dirty page mark information indicates a memory address of the dirty page.

The network interface card marks the dirty page in the memory page that is in the memory of the source host and that is associated with the to-be-migrated virtual machine, in other words, a dirty mark function in the memory is unloaded from the processor of the source host to the network interface card. This avoids a process in which the processor marks the dirty page in the memory, reduces resource consumption of the processor, and further avoids impact on another computing service of the source host because the processor manages a live migration process of the virtual machine.

In another optional implementation, the dirty page mark information includes at least one of a first dirty page table and a second dirty page table. The first dirty page table is for marking the dirty page as a dirty mark state, and the dirty mark state is a state in which the source host modifies data stored in the dirty page. The second dirty page table is for marking the dirty page as a data migration state, and the data migration state is a state in which the network interface card migrates the data stored in the dirty page.

In another optional implementation, the network interface card migrates the to-be-migrated data to the destination host includes: First, the network interface card sends page information of the to-be-migrated data to the destination host, where the page information indicates a memory address and an offset of the to-be-migrated data in the memory. Second, the network interface card receives a migration message fed back by the destination host based on the page information, where the migration message indicates a receive queue (receive queue, RQ) that is in the destination host and that corresponds to the to-be-migrated virtual machine. Third, the network interface card sends the to-be-migrated data to the RQ indicated by the migration message. When there are a plurality of RQs in a network interface card of the destination host and one RQ corresponds to one virtual machine, the network interface card of the destination host allocates, based on the page information sent by the network interface card of the source host, a migration message to the to-be-migrated virtual machine of the source host, and the network interface card of the source host migrates to-be-migrated data to an RQ indicated by the migration message. This avoids sending the to-be-migrated data of the to-be-migrated virtual machine (such as a VM 1) to an RQ corresponding to another virtual machine (such as a VM 2), and improves accuracy of data migration of virtual machine.

In another optional implementation, a send queue (send queue, SQ) in the network interface card maintains SG information including the memory address and an offset of the dirty page, and the foregoing page information includes the SG information corresponding to the dirty page.

In another optional implementation, that the network interface card sends the to-be-migrated data to the RQ indicated by the migration message includes: The network interface card obtains, from the SQ, the SG information corresponding to the dirty page, and sends, to the RQ indicated by the migration message, data indicated by the SG information. In the live migration process of the virtual machine, a data migration function of the source host is unloaded to the network interface card. This avoids copying data of the virtual machine for a plurality of times by the processor of the source host, reduces computing resource consumption of the source host, and improves efficiency of processing another computing service by the source host.

In another optional implementation, the source host establishes a control connection and a data connection to the destination host by using a transmission control protocol/internet protocol (transmission control protocol/internet protocol, TCP/IP), where the control connection is for transmitting the page information and the migration message, and the data connection is for transmitting the to-be-migrated data. In this embodiment, different transmission channels are for transmitting different information or data. This avoids a case in which the page information cannot be processed by the network interface card of a receiving side (the destination host) and a problem occurs during the live migration of the virtual machine because the page information is transmitted through the data connection, and improves data migration stability of the virtual machine.

In another optional implementation, the source host establishes a single connection to the destination host by using TCP/IP, where the single connection is for transmitting the page information, the migration message, and the to-be-migrated data.

In another optional implementation, the migration message is a message processing identifier (identifier, ID) allocated by the destination host to the to-be-migrated virtual machine. Because the single connection between the source host and the destination host may transmit data of different VMs, the foregoing message processing ID may be further for distinguishing a VM to which data in the single connection belongs. This avoids a transmission error of data of a plurality of VMs in the single connection, for example, data of a VM (1) is incorrectly identified as data of a VM (2), and improves accuracy of live migration of the VM.

In another optional implementation, the source host communicates with the destination host via a remote direct memory access (remote direct memory access, RDMA) network, the network interface card stores a memory protection table (memory protection table, MPT), the MPT table indicates a correspondence between a host physical address (host physical address, HPA) of the memory and a guest physical address (guest physical address, GPA) of the to-be-migrated virtual machine, and the MPT table includes physical function (physical function, PF) information used by the to-be-migrated virtual machine. That the network interface card sends the to-be-migrated data to the RQ indicated by the migration message includes: First, the network interface card determines PF information of the to-be-migrated virtual machine based on migration information. Then, the network interface card queries the MPT table based on the PF information and the GPA of the to-be-migrated virtual machine, to determine the HPA corresponding to the page information. Finally, the network interface card sends, to the destination host, the to-be-migrated data stored in the HPA of the to-be-migrated virtual machine.

In another optional implementation, the data migration method further includes: the network interface card obtains a second data migration notification message, where the second data migration notification message indicates an identifier of a to-be-received virtual machine. The network interface card migrates, to the memory of the source host, to-be-received data sent by another host, where the to-be-received data is data that is stored in a memory of the another host and that is associated with the to-be-received virtual machine. In this embodiment, the source host may serve as a transmitting end to send the to-be-migrated data of the to-be-migrated virtual machine to the destination host, and the source host may alternatively serve as a receiving end to receive data of a virtual machine that is sent by another host. This implements a transceiver function in a migration process of a plurality of virtual machines of the source host, and improves data migration performance of the source host.

According to a second aspect, this application provides a data migration apparatus. The data migration apparatus is used in a network interface card of a source host, and the data migration apparatus includes modules configured to perform the data migration method in any one of the first aspect or the possible implementations of the first aspect.

For example, the data migration apparatus includes a communication unit, a data identification unit, and a migration unit. The communication unit is configured to obtain a first data migration notification message, where the first data migration notification message indicates an identifier of a to-be-migrated virtual machine. The data identification unit is configured to determine to-be-migrated data based on the identifier, where the to-be-migrated data is data that is stored in a memory of the source host and that is associated with the to-be-migrated virtual machine. The migration unit is configured to migrate the to-be-migrated data to a destination host.

For beneficial effects, refer to descriptions in any one of the implementations of the first aspect. Details are not described herein again. The data migration apparatus has a function of implementing behavior in the method instance in any one of the implementations of the first aspect. The function may be implemented by hardware, or may be implemented by hardware executing corresponding software. The hardware or the software includes one or more modules corresponding to the function.

According to a third aspect, this application provides an electronic device. The electronic device includes an interface circuit and a control circuit. The interface circuit is configured to receive a signal from a device other than the electronic device and transmit the signal to the control circuit, or send a signal from the control circuit to a device other than the electronic device. The control circuit is configured to implement the method in any one of the implementations of the first aspect through a logic circuit or by executing code instructions. For beneficial effects, refer to descriptions in any one of the implementations of the first aspect. Details are not described herein again.

In a possible example, the electronic device may be a network interface card.

In another possible example, the electronic device may alternatively be a processor included in a network interface card.

In still another possible example, the electronic device may alternatively be a dedicated processing device that includes a network interface card. The dedicated processing device may implement the method in any one of the implementations in the first aspect.

It should be noted that the foregoing three examples are merely possible implementations provided in this embodiment, and should not be understood as a limitation on this application.

According to a fourth aspect, this application provides a computer-readable storage medium, where the storage medium stores a computer program or instructions. When the computer program or the instructions is or are executed by a host or a network interface card, the method in any one of the first aspect and the possible implementations of the first aspect is implemented.

According to a fifth aspect, this application provides a computer program product, where the computer program product includes instructions. When the computer program product runs on a host or a network interface card, the host or the network interface card is enabled to execute the instructions, to implement the method in any one of the first aspect and the possible implementations of the first aspect.

According to a sixth aspect, this application provides a chip. The chip includes a storage and a processor. The storage is configured to store computer instructions, and the processor is configured to invoke the computer instructions from the memory and run the computer instructions, to perform the method in any one of the first aspect and the possible implementations of the first aspect.

This application may further combine the implementations provided in the foregoing aspects to provide more implementations.

### BRIEF DESCRIPTION OF DRAWINGS

FIG. 1 is a diagram of an application scenario of a communication system according to this application;
FIG. 2 is a schematic diagram of a structure of a host according to this application;
FIG. 3 is a schematic flowchart 1 of a data migration method according to this application;
FIG. 4 is a schematic flowchart 2 of a data migration method according to this application;
FIG. 5 is a schematic diagram of a data migration according to this application; and
FIG. 6 is a schematic diagram of a structure of a data migration apparatus according to this application.

### DESCRIPTION OF EMBODIMENTS

This application provides a data migration method. First, a network interface card of a source host obtains a data migration notification message, where the data migration notification message indicates an identifier of a to-be-migrated virtual machine. Then, the network interface card determines to-be-migrated data based on the identifier, where the to-be-migrated data is data that is stored in a memory of the source host and that is associated with the to-be-migrated virtual machine. Finally, the network interface card migrates the to-be-migrated data to a destination host. In this embodiment, the to-be-migrated data is determined by the network interface card based on the identifier of the to-be-migrated virtual machine. This avoids a process in which the source host determines the to-be-migrated data of the virtual machine, reduces a computing resource required by the source host in a live migration process of the virtual machine, and improves a capability of performing another service (for example, compute-intensive and latency-sensitive services such as AI and HPC) by the source host.

The data migration method provided in this application is described below in detail with reference to the accompanying drawings.

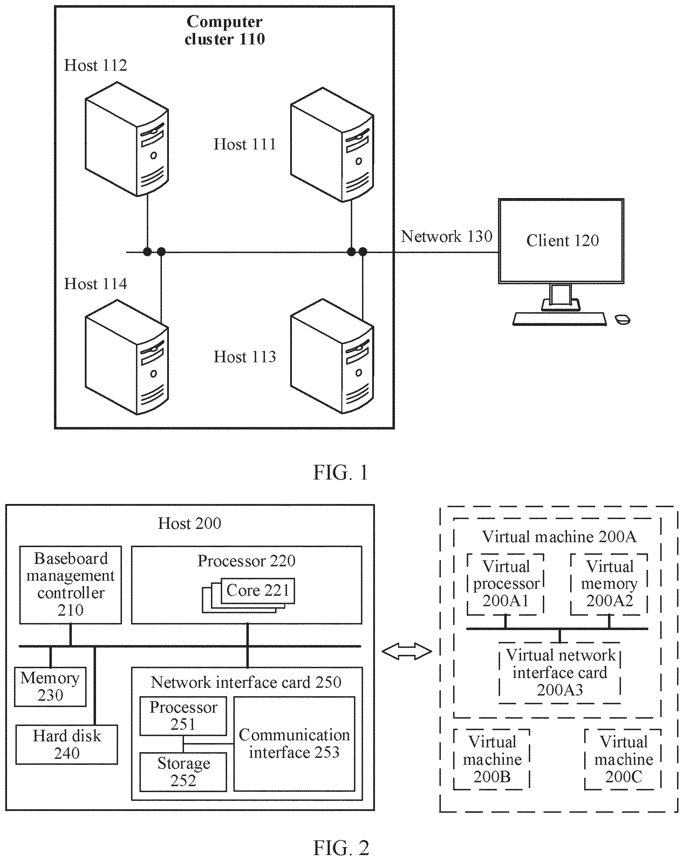

FIG. 1 is a diagram of an application scenario of a communication system according to this application. The communication system includes a computer cluster (computer cluster) 110 and a client 120. The computer cluster 110 may communicate with the client 120 by using a network 130. The network 130 may be the Internet or another network (for example, the Ethernet). The network 130 may include one or more network devices. For example, the network device may be a router, a switch, or the like.

The client 120 may be a computer running an application program, and the computer running the application program may be a physical machine, or may be a virtual machine. For example, if the computer running the application program is a physical computing device, the physical computing device may be a host or a terminal (Terminal). The terminal may also be referred to as a terminal device, user equipment (user equipment, UE), a mobile station (mobile station, MS), a mobile terminal (mobile terminal, MT), and the like. The terminal may be a mobile phone, a tablet computer, a notebook computer, a desktop computer, a desktop computer, a virtual reality (virtual reality, VR) terminal device, an augmented reality (augmented reality, AR) terminal device, a wireless terminal in industrial control, a wireless terminal in self driving, a wireless terminal in remote surgery (remote medical surgery), a wireless terminal in a smart grid (smart grid), a wireless terminal in a transportation safety (transportation safety), a wireless terminal in a smart city (smart city), a wireless terminal in a smart home (smart home), or the like. A specific technology and a specific device form used by the client 120 are not limited in embodiments of this application. In a possible implementation, the client 120 may be a software module running on any one or more hosts in the computer cluster 110.

The computer cluster 110 is a computer set connected by using a local area network or an internet, and is usually configured to execute a large task (which may also be referred to as a job (job)). The job herein is usually a large job that requires a large quantity of computing resources for parallel processing. A property and a quantity of jobs are not limited in this embodiment. One job may include a plurality of computing tasks, and these tasks may be allocated to a plurality of computing resources for execution. Most tasks are concurrent or executed in parallel, and some tasks depend on data generated by other tasks. Each computing device in the computer cluster uses same hardware and a same operating system. Alternatively, different hardware and different operating systems may be used in hosts in the computer cluster based on service requirements. Tasks deployed in the computer cluster may be executed in parallel. Therefore, overall performance can be improved.

As shown in FIG. 1, the computer cluster 110 includes a plurality of hosts, for example, a host 111 to a host 114. Each host may be configured to provide a computing resource. One host may include a plurality of processors or processor cores, and each processor or processor core may be a computing resource. Therefore, one physical host may provide a plurality of computing resources. For example, the physical host may be a server.

The computer cluster 110 may process a plurality of types of jobs. In this embodiment, a quantity of tasks and data of tasks that can be concurrently executed are not limited. For example, the foregoing job is live migration of a virtual machine, active/standby backup between hosts, or the like, for example, data backup.

In FIG. 1, the job may be submitted from the client 120 to the host 111 via the network 130 to the computer cluster 110. When the job is submitted from the host 111 to the computer cluster 110, the host 111 may be configured to manage all hosts in the computer cluster 110, to complete one or more tasks included in the job, for example, schedule a computing resource or a storage resource of another host. In another possible implementation, a position at which the job is submitted may alternatively be another host in the computer cluster 110. The position at which the job is submitted is not limited in this embodiment.

As shown in FIG. 1, one or more virtual machines may run in the computer cluster 110. The virtual machine is a virtual device obtained by virtualizing a physical computing resource, a storage resource, and a network resource by using a virtualization technology.

In a possible example, one or more VMs run on one host. For example, two VMs run on the host 111, and one VM runs on the host 114.

In another possible example, one VM runs on a plurality of hosts. For example, one VM uses a processing resource of the host 111 and a storage resource of the host 114.

FIG. 1 is merely an example provided in this embodiment, and should not be construed as a limitation on this application. In this application, an example in which one VM runs on one host is used for description.

It should be noted that FIG. 1 is merely a schematic diagram. The communication system may further include another device, which is not shown in FIG. 1. Quantities and types of hosts (computing devices) and clients included in the system are not limited in this embodiment of this application. For example, the computer cluster 110 may further include more or fewer computing devices. For example, the computer cluster 110 includes two computing devices, one computing device is configured to implement functions of the host 111 and a host 112, and the other computing device is configured to implement functions of a host 113 and the host 114.

FIG. 2 is a schematic diagram of a structure of a host according to this application. For example, any host in FIG. 1 may be implemented by using a host 200 shown in FIG. 2. The host 200 includes a baseboard management controller (baseboard management controller, BMC) 210, a processor 220, a memory 230, a hard disk 240, and a network interface card 250.

The baseboard management controller 210 may upgrade firmware of a device, manage a running state of the device, and rectify a fault. The processor 220 may access the baseboard management controller 210 by using a bus such as a peripheral component interconnect (Peripheral Component Interconnect express, PCIe) bus, a universal serial bus (Universal Serial Bus, USB), or an inter-integrated circuit bus (Inter-Integrated Circuit, I2C). The baseboard management controller 210 may further be connected to at least one sensor. State data of a computer device is obtained by using a sensor, where the state data includes temperature data, current data, voltage data, and the like. A type of the state data is not specifically limited in this application. The baseboard management controller 210 communicates with the processor 220 by using a PCIe bus or another type of bus, for example, transfers obtained state data to the processor 220 for processing. The baseboard management controller 210 may also maintain program code in a storage, including upgrading or restoring the program code. The baseboard management controller 210 may further control a power supply circuit or a clock circuit in the host 200, and the like. In conclusion, the baseboard management controller 210 may manage the host 200 in the foregoing manner. However, the baseboard management controller 210 is only an optional device. In some implementations, the processor 220 may directly communicate with the sensor, to directly manage and maintain the computer device.

It should be noted that, in addition to the PCIe bus, the USB bus, and the I2C bus, components in the host may be connected by using an extended industry standard architecture (extended industry standard architecture, EISA) bus, a unified bus (unified bus, Ubus or UB), a compute express link (compute express link, CXL), a cache coherent interconnect for accelerators (cache coherent interconnect for accelerators, CCIX), or the like. Buses may further be classified into an address bus, a data bus, a control bus, and the like.

The processor 220 is connected to the memory 230 by using a double rate (double data rate, DDR) bus. Herein, different memories 230 may communicate with the processor 220 by using different data buses. Therefore, the DDR bus may be replaced with another type of data bus. A type of the bus is not limited in this embodiment of this application.

In addition, the host 200 further includes various input/output (input/output, I/O) devices, and the processor 220 may access these I/O devices by using a PCIe bus.

The processor (processor) 220 is a computing core and a control core of the host 200. The processor 220 may include one or more processor cores (core) 221. The processor 220 may be a very large scale integrated circuit. An operating system and another software program are installed in the processor 220, so that the processor 220 can implement access to the memory 230 and various PCIe devices. It may be understood that, in this embodiment of the present invention, the processor 220 may be a central processing unit (central processing unit, CPU) or another application-specific integrated circuit (application-specific integrated circuit, ASIC). The processor 220 may alternatively be another general-purpose processor, a digital signal processor (digital signal processor, DSP), a field programmable gate array (field programmable gate array, FPGA) or another programmable logic device, a discrete gate or transistor logic device, or a discrete hardware component, or the like. During actual application, the host 200 may further include a plurality of processors.

The memory 230 is also referred to as a main memory (main memory). The memory 230 is usually configured to store various types of software that are running in an operating system, input and output data, information exchanged with an external memory, and the like. To increase an access speed of the processor 220, the memory 230 needs to have an advantage of a high access speed. In a conventional computer system architecture, a dynamic random access memory (dynamic random access memory, DRAM) is usually used as the memory 230. The processor 220 can access the memory 230 at a high speed by using a memory controller, and perform a read operation and a write operation on any storage unit in the memory 230. In addition to the DRAM, the memory 230 may be another random access memory, for example, a static random access memory (static random access memory, SRAM). A quantity and types of the memories 230 are not limited in this embodiment. In addition, the memory 230 may be configured to have a power failure protection function. The power failure protection function means that data stored in a storage is not lost even when a system is powered on again after a power failure. The memory 230 with the power failure protection function is referred to as a non-volatile storage.

For example, the memory 230 includes a plurality of memory pages (pages). The memory page is a minimum unit of a data I/O operation of the memory 230, and the memory page is also referred to as an atomic unit of data read/write. Each memory page corresponds to a segment of storage address space of the memory 230. For example, if one memory page may be for storing 4 kilo bytes (kilo bytes, KB) data, the memory page corresponds to 4 KB storage address space. In addition, one memory page may alternatively correspond to larger or smaller storage address space, for example, 2 KB or 8 KB.

In some possible cases, for example, in a live migration process of a virtual machine, if data that is of the virtual machine and that is stored in a memory page is modified within a period of time, the memory page may be referred to as a dirty page in the live migration process of the virtual machine, and data stored in a modified memory page (dirty page) is referred to as dirty page data of the virtual machine.

The I/O device is hardware that can perform data transmission, or may be understood as a device connected to an I/O interface. A common I/O device includes a network interface card, a printer, a keyboard, a mouse, and the like. For example, the I/O device may be the network interface card 250 shown in FIG. 2. All external memories may also be used as I/O devices, such as a hard disk, a floppy disk, and an optical disc. The processor 220 may access each I/O device by using a PCIe bus. It should be noted that the PCIe bus is merely an example, and may be replaced with another bus, for example, a unified (Unified Bus, UB, or Ubus) bus or a compute express link (compute express link, CXL).

As shown in FIG. 2, the network interface card 250 includes a processor 251, a storage 252 and a communication interface 253. In some possible examples, a network interface card that includes a processing unit and a network adapter (network interface card, NIC) is also referred to as an intelligent network interface card (intelligent NIC, iNIC).

The processor 251 is a processor having a processing capability, for example, a data processing unit (data processing unit, DPU). The DPU has versatility and programmability of a CPU, but is more specialized, and can run efficiently on a network data packet, a storage request, or an analysis request. The DPU is distinguished from the CPU by a high degree of parallelism (which requires processing a large quantity of requests). Optionally, the DPU herein may alternatively be replaced with a processing chip such as a graphics processing unit (graphics processing unit, GPU) or an embedded neural-network processing unit (neural-network processing unit, NPU).

The storage 252 may be an internal storage that directly exchanges data with the processor 251. The data can be read and written in the storage at a high speed at any time, and the storage serves as a temporary data storage of an operating system or another running program. The storage 252 includes at least two types of storages. For example, the storage 252 may be a random access memory, or may be a ROM. For example, the random access memory is a DRAM, or a storage class memory (storage class memory, SCM). The DRAM is a semiconductor storage, like most RAMs, belongs to a volatile memory (volatile memory) device. The SCM uses a composite storage technology that combines features of both a conventional storage apparatus and a storage. The storage class memory can provide a faster read/write speed than a hard disk, but has a slower access speed than the DRAM, and has lower costs than the DRAM. However, the DRAM and the SCM are merely examples for description in this embodiment, and the storage 252 may further include another random access memory, for example, an SRAM. A read-only memory may be, for example, a PROM, an EPROM, or the like. In addition, the storage 252 may alternatively be a dual in-line memory module or a dual-line memory module (dual in-line memory module, DIMM), in other words, a module formed by a DRAM, or may be a solid state disk (solid state disk, SSD). During actual application, a plurality of storages 252 and different types of storages 252 may be configured in the network interface card 250. A quantity and types of the storages 252 are not limited in this embodiment. In addition, the storage 252 may be configured to have a power failure protection function. The power failure protection function means that data stored in a storage 252 is not lost even when a system is powered on again after a power failure. A storage with the power failure protection function is referred to as a non-volatile storage.

In a possible case, the storage 252 stores a software program, and the processor 251 may run the software program in the storage 252 to implement management of VM migration, for example, migrate VM data stored in the memory 230 to another device.

The communication interface 253 is configured to implement a network interface card for communication between the host 200 and another device. For example, the network interface card 253 may implement one or more functions of parallel-to-serial data conversion, assembly and disassembly of a data packet, network access control, data caching, and a network signal.

As shown in FIG. 2, one or more VMs may run on the host 200, for example, a virtual machine 200A to a virtual machine 200C shown in FIG. 2. A computing resource required by the VM comes from the local processor 220 and the local memory 230 of the host 200, and a storage resource required by the VM may come from the local hard disk 240 of the host 200, or may come from a hard disk of another host. For example, the virtual machine 200A includes a virtual processor 200A1, a virtual memory 200A2, and a virtual network interface card 200A3. A computing resource required by the virtual processor 200A1 is provided by the processor 200, a storage resource required by the virtual memory 200A2 is provided by the memory 230 (or the hard disk 240), and a network resource required by the virtual network interface card 200A3 is provided by the network interface card 250. In addition, various application programs may run in the VM, and a user may trigger a service such as a data read/write request by using the application program in the VM.

For example, storage space of the virtual memory 200A2 in the VM may be provided by a memory page included in the memory 230. Generally, live migration of a VM may migrate the VM from one host to another host when service continuity is ensured. A key technology of the service continuity is migration of memory data, where the memory data is data stored in the memory page included in the memory 230. If the data stored in the memory page is modified within a period of time, the memory page may be referred to as a dirty page in a live migration process of the VM. Therefore, data stored in a modified memory page (the dirty page) is referred to as dirty page data of the VM.

Herein, an example in which a source host is the host 111 and a destination host is the host 112 in FIG. 1 is used for description, and memory migration may include the following several phases.
1. Iteration pre-copy phase: A VM still runs on the source host when migration starts. To ensure service continuity of the VM, data of a to-be-migrated virtual machine is simultaneously written to memories of the source host and the destination host.
2. Stop-and-copy phase: The VM running on the source host is interrupted, and data of the VM stored on a memory page of the source host is transferred to the memory of the destination host.
3. Dirty page copy phase: The VM still runs on the source host. The source host monitors and records any modification of all transmitted memory pages (that is, dirty pages in the memory pages) in a migration process, and transmits dirty page data stored in the dirty pages after all memory pages used by the VM are transmitted.
   In addition, the source host estimates a data transmission speed in the migration process. When the remaining amount of memory data can be transmitted within a specified time periodicity (for example, 30 milliseconds), the VM on the source host is shut down, and then remaining dirty page data of the VM is transmitted to the destination host.
4. Virtual machine restoration phase: The VM is started on the destination host, and an entire migration process of the VM is complete.

In a possible case, if the source host and the destination host share a storage system, the source host only needs to send an execution state of the VM, content in the memory, and a state of a virtual machine device to the destination host over a network. Otherwise, a disk storage of the VM further needs to be sent to the destination host. The shared storage system indicates that image file directories of a source virtual machine and a destination virtual machine are on a same shared storage.

It should be noted that a memory migration process provided in this embodiment is implemented between a plurality of hosts in the computer cluster 110. In an optional implementation, memory migration may alternatively be data migration between a host in the computer cluster 110 and another device outside the computer cluster 110. This is not limited in this application.

The following describes implementations of embodiments of this application in detail with reference to the accompanying drawings.

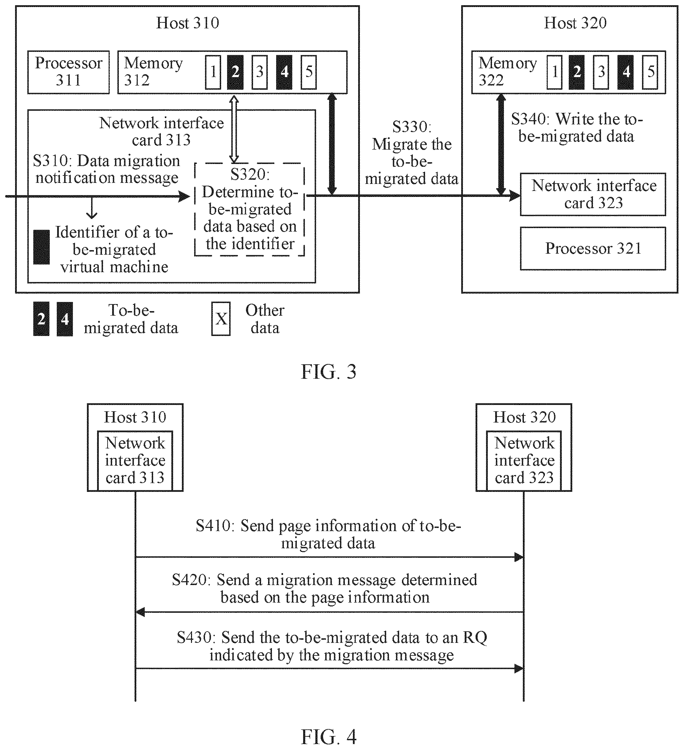

FIG. 3 is a schematic flowchart 1 of a data migration method according to this application. The data migration method may be applied to the communication system shown in FIG. 1. For example, a host 310 may implement a function of the host 111 in FIG. 1, and a host 320 may implement a function of the host 112 in FIG. 1. The data migration method may be performed by a network interface card 313. For hardware implementation of the host 310 in which the network interface card 313 is located, refer to the host 200 shown in FIG. 2. The network interface card 313 may also have a function of the network interface card 253 in FIG. 2. The host 320 is similar to the host 310, and details are not described herein.

For ease of description, the host 310 shown in FIG. 3 is referred to as a source host, or referred to as a transmit-end host, a first host, a source node, or the like. A memory 312 stores to-be-migrated data of one or more VMs. The to-be-migrated data includes running data of the VM before copying, data stored in a dirty page in a live migration process, and the like. The dirty page is a memory page (page) in which data in the memory 312 is modified.

For example, a virtual machine live migration management program may run in the network interface card 313, and a computing resource required by the virtual machine live migration management program is provided by a processor and a storage that are included in the network interface card 313. Specifically, the virtual machine live migration management program may manage, for example, read, write, or erase, dirty page data stored in the memory 312 of the host 310. In a live migration process of the virtual machine, a data migration function of a processor 311 is unloaded to the network interface card 313. This avoids data copying operations, by the processor 311 in the host 310, on the virtual machine for a plurality of times, reduces resource consumption of the processor 311, and improves efficiency of processing another computing service by the host 310.

For ease of description, the host 320 shown in FIG. 3 is referred to as a destination host, or referred to as a receive-end host, a second host, a destination node, or the like. A memory 322 is configured to store to-be-migrated data of one or more VMs. The to-be-migrated data includes running data of the VM before copying, data stored in a dirty page in a live migration process, and the like. The dirty page is a memory page (page) in which data stored in the memory 322 is modified in the live migration process of the VM. For example, to implement a live migration management process of the virtual machine, the foregoing virtual machine live migration management program may also run in a network interface card 323.

It should be noted that virtual machine management software may run in the source host and the destination host, and the virtual machine management software is configured to manage virtual machines on the source host and the destination host. For example, the virtual machine live migration management program may be a part of the virtual machine management software, or may be a thread started in the network interface card by the virtual machine management software to implement virtual machine live migration.

The network interface card usually receives and sends data in a manner of a message queue. The message queue includes a group of queue pairs (queue pairs, QPs), and the QP includes a send queue and a receive queue. For example, a message queue used by the network interface card 313 to send data is a send queue (SQ), and a message queue used by the network interface card 323 to receive data is a receive queue (RQ). The message queue is a connection manner used for communication between a plurality of hosts. For example, a plurality of connections may be established between the plurality of hosts by using a TCP/IP protocol. Each connection has one receive queue and one send queue, and the receive queue and the send queue are for transmitting data of the connection.

For example, the host 310 and the host 320 implement virtualization of a hardware network resource (for example, a network interface card) based on a single-root I/O virtualization (single-root I/O virtualization, SR-IOV) technology, and the SR-IOV technology is a technical implementation of a "virtual channel". For example, in the SR-IOV technology, a PCIe device that implements a physical function (physical function, PF) is virtualized, to obtain one or more PCIe devices that implement a virtual function (virtual function, VF). Each PCIe device that can implement the VF (which is referred to as a VF for short below) is directly allocated to a virtual machine. The host further provides separate memory space, an interrupt (number), and a direct memory access (direct memory access, DMA) stream for each VF.

In the SR-IOV technology, a PF driver of an SR-IOV device is configured to manage a physical function of a device having an SR-IOV function. The physical function supports a PCI function of the SR-IOV function defined in an SR-IOV specification. The physical function is a comprehensive PCIe function, and may be discovered, managed, and processed like any other physical PCIe device. The physical function may be configured to configure and control a virtual PCIe device.

The VF is a virtual network interface card or an instance virtualized by a physical network interface card that supports SR-IOV The VF is presented to the virtual machine in a form of an independent network interface card. Each VF has an exclusive PCI configuration area and may share a same physical resource (for example, share a physical network port) with another VF. The VF has a lightweight PCIe function and may share one or more physical resources (for example, physical network interface cards) with a PF and another VF associated with the PF.

For example, for one QP of the virtual machine, one VF corresponds to one or more SQs in the source host, and one VF corresponds to one or more RQs in the destination host.

The message queue stores a work queue element (work queue element, WQE). The WQE stores information pointing to an address and a length of data in a send queue or a receive queue. The length of the data may be determined by the address and an offset of the data. The information indicating the address and the offset of the data in the WQE is also referred to as scatter/gather (scatter/gather, SG) information. If a group of data includes a plurality of segments of data and SG information of one segment of data includes an address and an offset of the data, a plurality of pieces of SG information of the group of data in the WQE may also be referred to as an SG chain, or referred to as a scatter/gather list (scatter/gather list, SGL).

In a first feasible implementation, the address included in the SG information is a guest physical address (guest physical address, GPA) of data of the VM, a guest is a virtual machine (VM) running on the source host, and the GPA is a memory address of the data that is of the VM and that is stored in a memory (for example, the memory 312). In a possible case, the GPA may be an intermediate physical address (intermediate physical address, IPA). The VM may access corresponding data based on the GPA. However, a hardware device (such as a processor or a network interface card of a host) needs to access the data by using a host physical address (host physical address, HPA). Therefore, second level address translation from the GPA to a host virtual address (host virtual address, HVA) and from the HVA to the HPA needs to be performed on the GPA, so that the hardware device can access the data indicated by the SG information.

In a second feasible implementation, the address included in the SG information is an HPA of the data of the VM, and a hardware device (such as a processor or a network interface card of a host) may access the data of the VM based on the GPA.

It should be noted that the SG information is merely an example provided in this embodiment, and should not be understood as a limitation on this application.

Still refer to FIG. 3. The memory 312 includes a plurality of memory pages (pages), for example, pages whose sequence numbers are 1 to 5, which are respectively denoted as a page 1, a page 2, a page 3, a page 4, and a page 5. The plurality of pages include two memory pages associated with a to-be-migrated virtual machine, for example, the page 2 and the page 4 in the memory 312. For example, in the live migration process of the VM, the network interface card 313 may send, to another host such as the host 320, data stored in the page 2 and the page 4 in the memory 312.

As shown in FIG. 3, the data migration method provided in this embodiment includes the following steps.

S310: The network interface card 313 obtains a data migration notification message.

The data migration notification message indicates an identifier of the to-be-migrated virtual machine, for example, a small block filled in black in FIG. 3.

For example, if a plurality of virtual machines run in the host 310, the data migration notification message may indicate the to-be-migrated virtual machine in the plurality of virtual machines. This avoids migrating, to another host, data of a virtual machine that does not need to be migrated, and reduces a probability that data of the plurality of virtual machines is disordered in a data migration process.

Optionally, the data migration notification message is generated when the virtual machine management software triggers a live migration operation of the virtual machine. For example, the virtual machine management software manages a plurality of virtual machines. After the host 310 (or a client) triggers a live migration operation, the virtual machine management software generates the data migration notification message, where the data migration notification message may include the identifier of the to-be-migrated virtual machine. For example, the identifier is a sequence number of the virtual machine, or a label of the virtual machine in a virtual local area network (virtual local area network, VLAN).

A trigger condition of the live migration operation of the virtual machine may be a user operation and resource usage of the host. The resource usage may be information such as a quantity of resources to be released by the host, specifically, such as a computing resource, a storage resource, and network bandwidth of the host.

S320: The network interface card 313 determines to-be-migrated data based on the identifier indicated by the data migration notification message.

The to-be-migrated data is data that is stored in a memory (the memory 312) of the source host (the host 310) and that is associated with the to-be-migrated virtual machine.

Optionally, the network interface card 313 may determine, based on the identifier indicated by the data migration notification message, a memory page set that is in the memory 312 and that is associated with the to-be-migrated virtual machine, and use, as the to-be-migrated data, data stored in the memory page set. For example, the memory page set includes one or more memory pages.

As shown in FIG. 3, memory pages that are in the memory 312 and that are associated with the to-be-migrated virtual machine are the page 2 and the page 4, and data stored in the page 2 and the page 4 is the to-be-migrated data of the VM.

The network interface card 313 determines the to-be-migrated data based on the identifier of the to-be-migrated virtual machine. This avoids performance degradation of the host 310 caused because the processor 311 determines the to-be-migrated data, improves a capability of processing another service by the host 310, and reduces freezing of the host 310.

In a possible case, the to-be-migrated data includes dirty page data, and the dirty page data is data stored in a memory page that is in the one or more memory pages and in which data is modified. In the memory page set that is in the memory 312 and that is associated with the to-be-migrated virtual machine, the memory page in which the data is modified is a dirty page. As shown in FIG. 3, the page 2 is a dirty page, and data that is of the to-be-migrated virtual machine and that is stored in the page 2 is dirty page data.

For the dirty page data included in the to-be-migrated data, the following provides a possible specific implementation: The host 310 queries dirty page mark information stored in the network interface card, determines a dirty page set associated with the identifier, and uses, as the dirty page data, data stored in the dirty page set.

The dirty page set includes one or more dirty pages, for example, the page 2 shown in FIG. 3.

The dirty page mark information indicates a memory address of the dirty page. In an optional example, the dirty page mark information includes at least one of a first dirty page table and a second dirty page table. For example, the network interface card 313 may store one or more dirty page tables, and a plurality of dirty page tables may be for implementing different functions at a same time period.

The first dirty page table is for marking the dirty page as a dirty mark state, and the dirty mark state is a state in which the source host (for example, the processor 311 in the host 310) modifies data stored in the dirty page.

The second dirty page table is for marking the dirty page as a data migration state, and the data migration state is a state in which the network interface card (for example, the network interface card 313) migrates the data stored in the dirty page.

In a data migration process, the dirty page mark information may include only one dirty page table, and the dirty page table is for recording migration of the dirty page. For example, when the source host performs data access on the dirty page, the network interface card 313 needs to maintain only the first dirty page table, and mark the dirty page as the dirty mark state. For another example, when the network interface card 313 performs data access on the dirty page, the network interface card 313 needs to maintain only the second dirty page table, and mark the dirty page as the data migration state.

In addition, one dirty page table cannot be simultaneously accessed by a plurality of programs or hardware devices. Therefore, two dirty page tables may be further set in the network interface card 313 to mark a migration state of the memory page, for example, the first dirty page table and the second dirty page table. At a same time point, the two dirty page tables are respectively for implementing different functions.

After the network interface card 313 determines the memory page set associated with the to-be-migrated virtual machine, the following provides a feasible implementation, to describe the dirty page table included in the dirty page mark information.

For a memory page (page) in the memory 312, the network interface card 313 may mark a state of the page by using the dirty page table. For example, a dirty page table indicates migration states of all dirty pages in the memory page (page) associated with the to-be-migrated virtual machine. For example, a migration state of each dirty page is represented by a bit (Bit).

For example, one or more state marks may be set in the dirty page table. For example, a structure of the dirty page table may be shown in the following Table 1.

**Table 1**

| | M | S |
|---|---|---|
| Case 1 | 0 | 1 |
| Case 2 | 1 | 0 |

M and S are state marks for marking a migration state of a page.

The state mark M indicates information about access of the host 310 to the page. For example, M=1 indicates that the host 310 performs data access on the page, and M=0 indicates that the host 310 does not perform data access on the page.

The state mark S indicates information about access of the network interface card 3 13 to the page. For example, S=1 indicates that the network interface card 313 performs data access on the page (for example, migrates data in the page to another host), and S=0 indicates that the network interface card 313 does not perform data access on the page.

As shown in Table 1, there are the following two possible cases in a process in which the state mark marks a state of the page.

Case 1: M=1, and S=0. In this case, the page is in a dirty mark state, and the dirty mark state is a state in which the source host (for example, the processor 311 in the host 310) modifies data stored in the dirty page, for example, the first dirty page table.

Case 2: M=0, and S=1. In this case, the page is in a data migration state, and the data migration state is a state in which the network interface card (for example, the network interface card 313) migrates the data stored in the dirty page, for example, the second dirty page table.

Because one page cannot provide a data access service for a plurality of hardware devices at a same time point, a case of "M=1, and S=1" does not exist in the dirty page table. In addition, "M=0, and S=0" indicates that the page is not a dirty page, neither the processor 311 nor the network interface card 313 performs data access on the page indicated by the dirty page table, and the dirty page table does not need to record a migration state of a non-dirty page, a case of "M=0, and S=0" also does not exist in the dirty page table.

It should be noted that Table 1 is merely an example of the dirty page table provided in this embodiment. A meaning represented by the state mark (for example, M and S) in the dirty page table may be adjusted based on different use scenarios and requirements. This is not limited in this application.

In the data migration process, to manage the dirty page mark information, a dirty mark program and a migration program may be run in the virtual machine management software. The dirty mark program and the migration program may be a software module in the virtual machine live migration management program, or may be an independent software unit triggered by the virtual machine management software. This is not limited in this application.

In a possible example, the dirty mark program and the migration program run on the network interface card 313.

In another possible example, the dirty mark program and the migration program run on the processor 311.

Herein, an example in which the dirty mark program and the migration program run on the network interface card 313 is used for description.

For example, the dirty mark program is for managing the first dirty page table. For example, after the data stored in the memory page is modified, the dirty mark program marks a state mark bit of the memory page in the first dirty page table as "M=1, and S=0".

For another example, the migration program is for managing the second dirty page table. For example, when modified data in the memory page is migrated to another host, the migration program marks a state mark bit of the memory page in the second dirty page table as "M=0, and S=1". After the modified data in the memory page is migrated to the another host, the migration program marks the state mark bit of the memory page in the second dirty page table as "M=0, and S=1".

In this embodiment, the network interface card 313 marks the dirty page in the memory page that is in the memory 312 and that is associated with the to-be-migrated virtual machine, in other words, a dirty mark function of the memory 312 is unloaded from the processor 311 to the network interface card 313. This avoids a process in which the processor 311 marks the dirty page in the memory 312, reduces resource consumption of the processor 311, and further avoids impact on another computing service of the host 310 caused because the processor 311 manages the live migration process of the virtual machine.

In the network interface card 313, for a page of the memory 312, the network interface card 313 may mark the page by using two dirty page tables. If the page is a dirty page, and the processor 311 is modifying data stored in the page, the network interface card 313 marks the page by using a dirty page table 1 (the first dirty page table), and marks the page as M=1 and S=0, as shown in the foregoing case 1. If the network interface card 313 needs to send the data stored in the dirty page, the network interface card 313 marks the dirty page by using a dirty page table 2 (the second dirty page table), and marks the dirty page as M=0 and S=1, as shown in the foregoing case 2. When two dirty page tables are set in the network interface card 313 to mark a migration state of a dirty page, because the dirty mark program may modify the first dirty page table, and the migration program may modify the second dirty page table, a data migration error caused because the dirty mark program and the migration program simultaneously modify one dirty page table is avoided.

For a process in which the network interface card 313 identifies the dirty page in the memory page set by using the dirty page mark information, a possible specific example is provided herein. A dirty page scanning process includes the following possible steps.

Step 1: The network interface card 313 sets two dirty page tables: the dirty page table 1 and the dirty page table 2. Each of the two dirty page tables has two mark bits (for example, M and S shown in Table 1). Mark bits in the dirty page table 1 are all set to 0, and mark bits in the dirty page table 2 are all set to 1, where "1" indicates a dirty page, "0" indicates a non-dirty page. That the mark bits in the dirty page table 2 are all "1" indicates that any page recorded in the dirty page table 2 is a dirty page.

Step 2: The network interface card 313 initializes the dirty page table 1 in which the mark bits are all 0, and marks all pages in the dirty page table 1 as "M=1, and S=0"; and the network interface card 313 initializes the dirty page table 2 in which the mark bits are all 1, and marks all pages in the dirty page table 2 as "M=0, and S=1". The network interface card 313 initializes the dirty page table 1 and the dirty page table 2, so that states of all dirty pages recorded in the dirty page table 1 are marked as dirty mark states, and management of the dirty page table 1 is handed over to the foregoing dirty program; and states of all dirty pages recorded in the dirty page table 2 are marked as data migration states, and management of the dirty page table 2 is handed over to the foregoing migration program. The two dirty page tables are managed by different programs respectively. This avoids a data migration error caused because one dirty page table is modified by different programs.

Step 3: The network interface card 313 scans a plurality of pages of the memory 312 in the host 310, and marks a dirty page in the plurality of pages as "M=1, and S=0". After the network interface card 313 determines memory pages that are in the memory 312 and in which data is modified by the processor 311, the network interface card 313 marks these memory pages as dirty pages, so that the network interface card 313 starts a data migration operation of the dirty pages.

Step 4: The network interface card 313 scans the dirty page table 2 in which M=0 and S=1. After all scanning is completed, all state mark bits corresponding to any dirty page recorded in the dirty page table 2 are cleared to 0 (marked as M=1 and S=0), and a page corresponding to the dirty page table 2 in the dirty page table 1 is set to 1 (marked as M=0 and S=1).

In this way, the network interface card 313 may scan a page in which "M=0, and S=1" in the dirty page table 1 (or the dirty page table 2), and after sending, to another host, data stored in the page, the network interface card 313 marks a mark of the page in the dirty page table 1 as "M=1, and S=0", to implement a dirty mark process and a data migration (or pushing) process in the memory 312.

It should be noted that the foregoing embodiment is described by using an example in which one page is a dirty page. When the live migration process of the VM relates to a plurality of dirty pages, the dirty page table stored in the network interface card 313 further records address information of the dirty page. For example, the address information is an HPA of the dirty page in the host 310, or a GPA corresponding to the dirty page in the VM.

Still refer to FIG. 3. The data migration method provided in this embodiment further includes the following steps.

S330: The network interface card 313 migrates the to-be-migrated data to the host 320.

In this embodiment, the to-be-migrated data is determined by the network interface card based on the identifier of the to-be-migrated virtual machine. This avoids a process in which the source host determines the to-be-migrated data of the virtual machine, reduces a computing resource required by the source host in the live migration process of the virtual machine, and improves a capability of performing another service (for example, compute-intensive and latency-sensitive services such as AI and HPC) by the source host.

After the host 320 receives the to-be-migrated data, still refer to FIG. 3. The data migration method provided in this embodiment further includes the following step S340.

S340: The network interface card 323 migrates the to-be-migrated data to the memory 322 of the host 320.

The network interface card of the destination host writes the to-be-migrated data into the memory of the destination host. This avoids a process of copying the to-be-migrated data from the network interface card to the memory in the destination host, reduces data migration latency, and improves efficiency of data migration. In addition, because a processor of the destination host does not need to copy the to-be-migrated data of the virtual machine, consumption of a computing resource and a storage resource of the destination host in the live migration process of the virtual machine is reduced, and a capability of executing another service by the destination host is improved.

In addition, the host 310 may alternatively serve as a destination host to receive data of a virtual machine that is sent by another host. For example, the host 310 receives another data migration notification message, where the data migration notification message indicates an identifier of a virtual machine to be received by the host 310. The host 310 migrates to-be-received data sent by the another host to the memory 312, where the to-be-received data is data that is stored in a memory of the another host and that is associated with the to-be-received virtual machine. For a process in which the host 310 receives the data of the virtual machine migrated by the another host, refer to content of receiving data by the host 320 in the foregoing embodiment. Details are not described herein again.

In this embodiment, the source host may serve as a transmitting end to send the to-be-migrated data of the to-be-migrated virtual machine to the destination host, and the source host may alternatively serve as a receiving end to receive data of a virtual machine that is sent by another host. This implements a transceiver function in a migration process of a plurality of virtual machines of the source host, and improves data migration performance of the source host.

In an optional implementation, for a process in which the source host migrates the to-be-migrated data to the destination host, a feasible specific implementation is provided herein. FIG. 4 is a schematic flowchart 2 of a data migration method according to this application. FIG. 4 shows a possible implementation of S330. S330 includes the following steps.

S410: A network interface card 313 sends page information of to-be-migrated data to a host 320.

The page information indicates a memory address and an offset of the to-be-migrated data in a memory 312.

For example, a send queue SQ in the network interface card 313 maintains SG information including a memory address and an offset of a dirty page, and the page information includes the SG information corresponding to the dirty page. In some cases, the page information may be referred to as description information of the to-be-migrated data. For example, the description information is metadata for describing service data stored in the dirty page.

S420: A network interface card 323 sends, to the network interface card 313, a migration message determined based on the page information.

The migration message indicates a receive queue (RQ) corresponding to a to-be-migrated virtual machine in a destination host.

For example, the migration message is an RQ identifier, an RQ sequence number, or the like that is allocated by the network interface card 323 to the to-be-migrated virtual machine in the host 310 based on the page information.

In a possible case, after obtaining a data migration notification message, the network interface card 313 and the network interface card 323 allocate one or more RQs to the to-be-migrated virtual machine. The migration message is a sequence number (or an identifier) of one RQ selected from the one or more RQs after the network interface card 323 receives the page information of the to-be-migrated data.

In another possible case, after the network interface card 323 receives the page information of the to-be-migrated data, the network interface card 323 establishes, with the network interface card 313, a data connection (or a transmission channel) for transmitting the to-be-migrated data, data transmission in the data connection is implemented by using a QP, and the migration message is a sequence number (or an identifier) of a receive queue (RQ) included in the QP.

The foregoing two possible cases are merely examples of a manner of generating the migration message provided in this embodiment, and should not be understood as a limitation on this application.

S430: The network interface card 313 sends the to-be-migrated data to the RQ indicated by the migration message.

When there are a plurality of RQs in the network interface card 323 and one RQ corresponds to one virtual machine, the network interface card 323 allocates, based on the page information sent by the network interface card 313, the migration message to the to-be-migrated virtual machine of the host 310, and the network interface card 313 migrates the to-be-migrated data to the RQ indicated by the migration message. This avoids sending the to-be-migrated data of the to-be-migrated virtual machine (such as a VM 1) to an RQ corresponding to another virtual machine (such as a VM 2), and improves accuracy of data migration of the virtual machine.

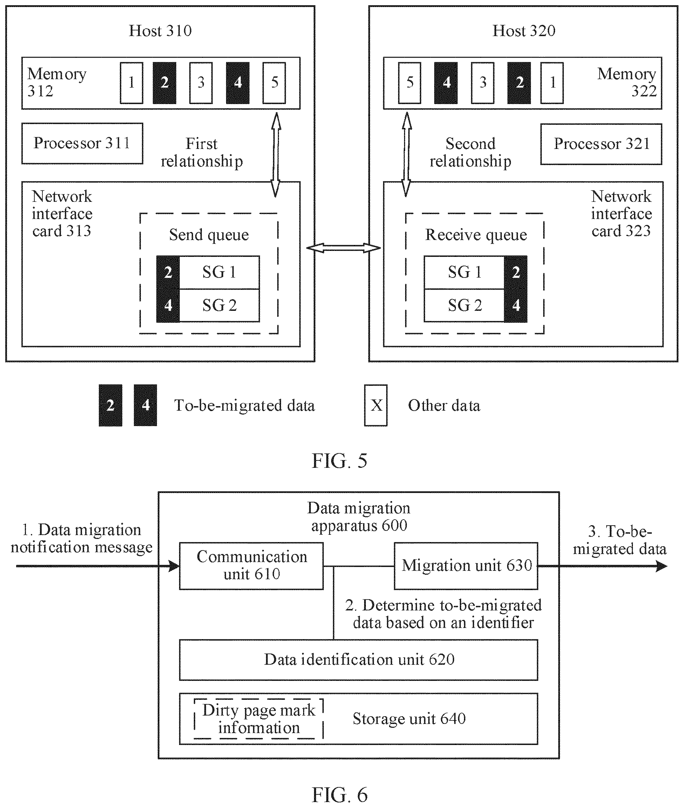

For the foregoing relationship between the page information and the to-be-migrated data, a possible implementation is provided herein. FIG. 5 is a schematic diagram of data migration according to this application. A network interface card 313 and a network interface card 323 establish a transmission channel in a QP manner. The QP herein includes a send queue in the network interface card 313 and a receive queue in the network interface card 323, where the send queue is located at a transmitting end of the transmission channel, and the receive queue is located at a receiving end of the transmission channel.

As shown in FIG. 5, there is a first relationship between SG information maintained by the send queue (SQ) included in the network interface card 313 and a memory page that is in a memory 312 and that is associated with a to-be-migrated virtual machine.

For example, the first relationship is established by the network interface card 313 after the network interface card 313 determines to-be-migrated data based on an identifier of the to-be-migrated virtual machine and by using a memory address of a memory page that is in the memory 312 and that is associated with the identifier.

In one case, the first relationship is a correspondence between service data stored in the memory page in the memory 312 and the SG information, such as page 2-SG 1 and page 4-SG 2 in the network interface card 313 shown in FIG. 5.

In another case, the first relationship is a correspondence between the memory address of the memory page and the SG information. For example, a memory address of a page 2 is 001, and a memory address of a page 4 is 011. In this case, the correspondence includes 001-SG 1 and 011-SG 2.

It should be noted that the foregoing two cases are examples provided in this embodiment, and should not be understood as a limitation on this application. For example, in another possible case, the first relationship is a correspondence between a memory address (or dirty page data) of a dirty page associated with the to-be-migrated virtual machine and SG information.

As shown in FIG. 5, when memory addresses of a plurality of dirty pages are not consecutive, in the SQ, each dirty page corresponds to one piece of SG information. For example, SG 1 includes "001 4 KB", indicating that the page 2 whose address is "001" in the memory 312 is a dirty page, and a data length of service data stored in the dirty page is 4 KB; and SG 2 includes "011 4 KB", indicating that the page 4 whose address is "011" in the memory 312 is a dirty page, and a data length of service data stored in the dirty page is 4 KB.

It should be noted that the example provided based on FIG. 5 is described by using an example in which a basic unit of data read/write in the memory 312 is a page, and storage space of a single page is 4 KB. However, a live migration process of one VM may be related to a plurality of dirty pages, and memory addresses of the plurality of dirty pages are consecutive. In this case, the plurality of dirty pages may correspond to only one piece of SG information in the SQ. For example, addresses of two dirty pages are respectively "001" and "010", and data lengths of service data stored in dirty pages are both 4 KB. In this case, when the network interface card 313 maps the service data stored in the two dirty pages to the SQ, SG information corresponding to the two dirty pages may be "001 8 KB".

In the data migration process of the VM, the network interface card 313 maps a dirty page in the memory 312 to SG information in the SQ, and service data stored in the dirty page does not need to be copied to a storage in the network interface card 313. In the host 310, data copying of the service data from the memory 312 to the network interface card 313 is avoided, data migration time of the VM is reduced, and efficiency of live migration of the VM is improved.

As shown in FIG. 5, there is a second relationship between SG information maintained by a receive queue (RQ) included in the network interface card 323 and a memory page in a memory 322.

For example, the second relationship is a correspondence between service data stored in the memory page and the SG information, such as page 2-SG 1 and page 4-SG 2 in the network interface card 323 shown in FIG. 5.

For another example, the second relationship is a correspondence between a memory address of the memory page in the memory 322 and the SG information. For example, the memory address of the page 2 is 001, the memory address of the page 4 is 011. In this case, the second relationship includes 001-SG 1 and 011-SG 2.

In another possible case, the second relationship is a correspondence between the memory address (or the dirty page data) of the dirty page associated with the to-be-migrated virtual machine and the SG information.

For example, after the network interface card 313 and the network interface card 323 establish a transmission channel of the to-be-migrated data, the network interface card 323 establishes the second relationship based on the memory address included in the page information.

In the following content of this specification, in a source host, the to-be-migrated virtual machine is referred to as a source VM; and in a destination host, the to-be-migrated virtual machine is referred to as a destination VM.

To avoid a change in storage space of the to-be-migrated data in the source host and the destination host, a memory address (for example, a source VM GPA) of a group of data in the source host needs to be consistent with a memory address (for example, a destination VM GPA) of the group of data in the destination host. In a feasible example, consistency between the source VM GPA and the destination VM GPA is implemented by a virtual machine management software. For example, after the network interface card 313 establishes the first relationship, the network interface card 323 establishes the second relationship by using the virtual machine management software and the first relationship, so that the source VM GPA is consistent with the destination VM GPA, a change, after the virtual machine is migrated, of a memory address indicating data in the virtual machine is avoided, and accuracy of virtual machine migration is improved.

To avoid large data migration latency and definite freezing of the virtual machine that are caused because the network interface card 313 copies data (for example, the dirty page data) from the memory 312 and then sends copied dirty page data to the host 320, for the foregoing S430, with reference to the SQ, the RQ, and the SG information shown in FIG. 5, an optional implementation is provided herein: The network interface card 313 obtains, from the SQ, SG information corresponding to a dirty page, and the network interface card sends, to the RQ indicated by the migration message, data indicated by the SG information.

In this embodiment, a memory address included in the SG information corresponding to the dirty page may be the HPA or the GPA provided in the foregoing example.

For example, if the memory address included in the SG information is the HPA, the network interface card 313 migrates, to the host 320 based on storage address space indicated by the HPA, the dirty page data stored in the dirty page.

For another example, if the memory address included in the SG information is the GPA, the network interface card 313 performs address translation based on the GPA to obtain an HPA of the dirty page, and then migrates, to the host 320, the dirty page data stored in storage address space indicated by the HPA.

That the network interface card 313 performs address translation based on the GPA may be implemented by using an IO memory management unit (memory management unit, MMU). Specifically, the IOMMU may perform address translation on the GPA based on VF information used by the to-be-migrated virtual machine on the host 310, to obtain the HPA of the dirty page. The VF information indicates an identifier of a virtual PCIe device (such as a network interface card or a memory) used by the to-be-migrated virtual machine.

Because the host provides independent memory space for each VF, and in the source host, one VF corresponds to one or more SQs, the network interface card 313 performs address translation on the GPA included in the SG information in the SQ based on VF information, to obtain the HPA of the dirty page, so that the network interface card 313 can migrate dirty page data to the host 320 based on the HPA. This implements data migration of the to-be-migrated virtual machine, avoids a process of copying the dirty page data from the memory 312 to the network interface card 313, reduces data migration time, and improves migration efficiency of the virtual machine.

In this embodiment, the network interface card 313 maps a dirty page in the memory 312 to the SG information in the SQ, and service data stored in the dirty page does not need to be copied to the storage in the network interface card 313. In the host 310, data copying of the service data from the memory 312 to the network interface card 313 is avoided, live migration time of the VM is reduced, and efficiency of live migration of the VM is improved.

In addition, the foregoing embodiment is described by using an example in which an SQ and an RQ in a message queue pair (QP) are 1:1. In some other possible cases, a quantity ratio of SQs to RQs may alternatively be N:M, where both N and M are positive integers, and N≠M. For example, the quantity ratio of the SQs to the RQs is 2:1. For example, in the network interface card 313, SG 1 information corresponding to the page 2 is stored in an SQ (1), and SG 2 information corresponding to the page 4 is stored in an SQ (2). In the network interface card 323, the SG 1 information and the SG 2 information are stored in one RQ. In a migration process of the to-be-migrated data, the network interface card 313 migrates, based on the SG 1 information and the SG 2 information, data stored in the page 2 and data stored in the page 4 to storage address space to which the RQ is mapped.

In the foregoing embodiment provided in this application, migration of the to-be-migrated data may be implemented by using the TCP/IP protocol, an RDMA network, or the like.

In a TCP/IP scenario, the host 310 (a source host) and the host 320 (a destination host) establish two transmission channels by using the TCP/IP protocol: a control connection and a data connection. The control connection is for transmitting page information and a migration message, and the data connection is for transmitting the to-be-migrated data.

In this embodiment, different transmission channels are for transmitting different information or data. This avoids a case in which the page information cannot be processed by the network interface card 323 of a receiving side and a problem occurs during live migration of a virtual machine because the page information is transmitted through the data connection, and improves data migration stability of the virtual machine.

In addition, in the TCP/IP scenario, the host 310 (the source host) and the host 320 (the destination host) may alternatively establish only one transmission channel: a single connection by using the TCP/IP protocol. The single connection may be for transmitting the page information, the migration message, and the to-be-migrated data.

A possible specific example is provided herein, to describe a process of data migration between the source host and the destination data in the TCP/IP scenario.

Step 1: The network interface card 313 sends page information (SG information) of a dirty page to be copied this time to the network interface card 323 by using the single connection.

An address included in the SG information in a send queue and a receive queue may be a GPA or an HPA, provided that memory space corresponding to the two (a source VM and a destination VM) are completely the same at a GPA layer, and complete replication from a memory of the source host to a memory of the destination host can be implemented.

If the address included in the SG information is the GPA, an IOMMU needs to implement address translation from the GPA to the HPA.

If the address included in the SG information is the HPA, an IOMMU is not required and address translation is performed. The network interface card 313 directly specifies a PCIe device that is for implementing a PF and to which the host 320 belongs, to directly send data to the host 320. In this case, because data transmitted by the network interface card 313 based on the single connection is all sent to the host 320, in other words, in the single connection, information (which is referred to as PF information for short) about the PCIe device that implements the PF is the same, and the network interface card 313 can configure the PF in a TCP connection context. The PF information indicates an identifier of a physical PCIe device used by a to-be-migrated virtual machine.

In this example, the network interface card 313 configures the PF information in the TCP connection context. This avoids a case in which the PF information needs to be configured for each group of data in a migration process of a plurality of groups of data of one virtual machine from the source host to the destination host, reduces total time of data migration, and improves efficiency of data migration of the virtual machine.

It should be noted that the PF and the VF are concepts of a virtual device in a PCIe interface, and should not be understood as a limitation on this application. For another interface, you only need to use a corresponding identifier to identify the virtual device.

Step 2: The destination host allocates a message processing ID (for example, the foregoing migration message) based on the page information received by the network interface card 323, where one message processing ID corresponds to one receive queue in the network interface card 323.

In a possible example, the message processing ID is allocated by the network interface card 323, to reduce load of the destination host, and improve a computing capability of the destination host for processing another service.

In addition, the network interface card 323 may further set the receive queue based on received page information (SG information) of a dirty page by using a live migration management program. For example, an SG sequence of a corresponding receiving memory block in the receive queue is completely the same as an SG sequence of a corresponding memory block in the send queue, memory space corresponding to the memory block in the receive queue and the memory block in the send queue is completely the same at a GPA layer of a VM, and the foregoing page information (the SG information or an SG information block) is placed in the receive queue.

Step 3: The network interface card 313 adds a message header carrying the foregoing message processing ID to a memory block (dirty page data) corresponding to a dirty page to be sent this time, and puts the memory block into an SQ of the TCP in an SG manner based on a memory organization sequence the same as that of the SG information. The network interface card 313 notifies hardware (for example, a communication interface) to fetch data from a memory specified by the SQ and send the data to an RQ of the destination host.

Step 4: After receiving data carrying the message header (the message processing ID), the network interface card 323 obtains, based on the message processing ID, SG information stored in the corresponding RQ, and writes the data into a memory of the destination host corresponding to the SG information.

In an optional implementation, in a process in which the network interface card 323 sends the migration message to the network interface card 313, the network interface card 323 may further notify the network interface card 313 of buffer information of the memory 322. For example, the buffer information includes an available margin, for example, 10 megabytes (megabytes, MBs), of buffer (buffer) space that is in the host 320 and that is for performing live migration of a virtual machine. In a service data transmission process, service data sent by the network interface card 313 does not exceed the available margin of the buffer space notified by the host 320, so that the network interface card 323 does not quickly write data in the buffer space into the memory 322 due to a large amount of service data.

In addition, because the single connection between the source host and the destination host may transmit data of different VMs, the foregoing PF information/VF information may be further for distinguishing a VM to which data in the single connection belongs. This avoids a transmission error of data of a plurality of VMs in the single connection, for example, data of a VM (1) is incorrectly identified as data of a VM (2), and improves accuracy of live migration of the VM.

A live migration management process of a VM is implemented by a network interface card, and does not need to consume a computing resource of a processor of the source host. In addition, service data of the VM is directly copied from the memory of the source host to the memory of the destination host by the network interface card, so that a quantity of data copying times and data copying time of the service data is reduced, and latency of live migration of the VM is reduced.

Because PF information used by a to-be-migrated virtual machine is configured in the single connection, the network interface card 313 may further migrate service data of one unit (for example, 10 dirty pages) to the destination host (the host 320), and the network interface card 313 receives a response fed back by the destination host. For example, after the response indicates that the network interface card 323 has completed a write operation of the service data of the unit, the network interface card 313 initiates a service data migration process of a next unit.

In conclusion, a live migration process of a VM is unloaded by a processor in a host to a network interface card. Therefore, processing resource consumption of the processor in the host is reduced.

In addition, in the live migration process of the VM, because a network interface card of the source host stores only metadata (such as SG information) of a dirty page, the network interface card does not need to store service data of the dirty page, and an amount of the metadata is less than an amount of the service data, so that consumption of a storage resource in the network interface card is reduced.

In addition, the network interface card may send, to the destination host by using the metadata of the dirty page, the service data stored in the dirty page of the memory. This avoids a process of copying the service data from the memory to the network interface card, and reduces data copying time. Therefore, latency of live migration of the VM is increased, and efficiency of the live migration of the VM is improved.

In the foregoing embodiment of this application, a live migration process of the virtual machine is implemented based on the TCP protocol. However, in some possible cases, the live migration process of the virtual machine may alternatively be implemented based on an RDMA network.

RDMA is a technology for accessing data in a memory of a remote host by bypassing an operating system kernel of the remote host. Because the operating system is bypassed, not only a large quantity of CPU resources are saved, but also a system throughput is improved and network communication latency of the system is reduced. The RDMA is especially suitable for wide application in a massively parallel computer cluster. The RDMA mainly has the following characteristics: (1) Data is transmitted between a network and a remote machine. (2) All content related to sending and transmission is unloaded to an intelligent network interface card without participation of the operating system kernel. (3) Data is directly transmitted between a user space virtual memory and the intelligent network interface card, the operating system kernel is not involved, and no extra data is moved or copied.

Currently, there are roughly three types of RDMA networks: Infiniband (Infiniband, IB), RDMA over converged Ethernet (RDMA over Converged Ethernet, RoCE), and an internet wide-area RDMA protocol (internet wide-area RDMA protocol, iWARP). The Infiniband is a network designed for the RDMA, to ensure reliable transmission in terms of hardware, and a network interface card and a switch that support this technology are required. The RoCE and the iWARP are both Ethernet-based RDMA technologies, and only special network interface cards need to be configured. In terms of performance, the Infiniband network has the best performance, but price of the network interface card and the switch is high. However, the RoCE and the iWARP require only special network interface cards, and price is relatively much lower.

The following provides a possible example, to describe a data migration method of a virtual machine in an RDMA scenario.

When the network interface card 313 and the network interface card 323 implement, based on the RDMA network, the data migration method provided in this application, the network interface card 313 and the network interface card 323 may also be referred to as an intelligent network interface card. A possible hardware and software implementation of the intelligent network interface card is provided herein: The intelligent network interface card includes a CPU and a network interface card (network interface card, NIC), and a live migration management program runs on the CPU.

In the RDMA scenario, the network interface card 313 registers all memory space GPAs and HPAs of a to-be-migrated VM (which is also referred to as a source VM) as a memory (memory) area, to generate a memory protection table (memory protection table, MPT) and a memory translation table (memory translation table, MTT), where PF information for accessing a host is added to the MPT table, to obtain a local source local key (source local key, S_LKey) and a source remote key (source remote key, S_RKey). The MPT table indicates a correspondence between an HPA of a memory and a GPA of the to-be-migrated virtual machine.

Similarly, the network interface card 323 registers all memory space GPAs and HPAs of the VM as a memory area, to generate an MPT table and an MTT table, where PF information for accessing the host is added to the MPT, to obtain a local destination local key (destination local key, D_LKey) and a destination remote key (destination remote key, D_RKey).

The MPT table in the RDMA scenario is for implementing functions of the page information and the migration message in the TCP/IP scenario, to implement the data migration method provided in this application.

For example, that the network interface card 313 sends the to-be-migrated data to the RQ indicated by the migration message may include the following process: First, the network interface card 313 determines PF information of the to-be-migrated virtual machine based on the migration information. Second, the network interface card 313 queries the MPT table based on the PF information and the GPA of the to-be-migrated virtual machine, to determine an HPA corresponding to the page information. Finally, the network interface card 313 sends, to the destination host (the host 320), the to-be-migrated data stored in the HPA of the to-be-migrated virtual machine.

For example, the live migration management program running in the network interface card 313 obtains description information (metadata) of a dirty page in the memory 312, determines, by using a GPA, that the D_RKey registered in the network interface card 323 is an R-KEY, and initiates "RDMA write" one by one to write data into the memory 322 in the destination host (the host 320).

It should be noted that transmission mode of the RDMA includes a bilateral operation and a unilateral operation. Send/receive operation is a bilateral operation, in other words, a remote application needs to sense and participate in sending and receiving. Read and write operations are unilateral operations. Only a local end needs to specify a source address and a destination address that are of information. The remote application does not need to sense this communication. Data is read or stored through a remote network interface card. The remote network interface card encapsulates the data into a message and returns the message to the local end.

For example, in the data migration method provided in this embodiment, the send/receive operation may be for transmitting description information of a dirty page, and the read and write operations may be for transmitting service data stored in the dirty page.

Herein, the data migration method in this embodiment is described by using an RDMA write operation as an example. The RDMA write operation is used by a request end (for example, the network interface card 313) to write data into storage space of a response end (for example, the host 320).

Before allowing the network interface card 313 to perform the RDMA write operation, the host 320 first allocates storage space for a QP (or a QP group) of the host 320 to access. A channel adapter of the host 320 associates a key with a virtual address of the storage space. The host 320 sends the virtual address, a length, and a key of the storage space to the network interface card 313 that may access the memory area. For example, the foregoing information may be sent to the network interface card 313 by using the foregoing sending operation. The virtual address and the key of the storage space may be for determining an HPA of a dirty page.

The network interface card 313 may initiate the RDMA write operation by sending an RDMA write message. The message includes data to be written to the host 320, the virtual address of the storage space of the host 320, a length of data, and a key. The length of the data may be between 0 bytes and 231 bytes. If the length of the data is greater than a path maximum transmission unit (path maximum transmission unit, PMTU), the data is segmented into a plurality of packets based on a size of the PMTU, and the host 320 recombines the packets to obtain the data. For a reliable connection, if the data is a short message (in other words, the data does not need to be segmented into a plurality of packets), the host 320 sends an acknowledgment packet to the network interface card 313 for each packet. If the data is a long message (in other words, the data is segmented into a plurality of packets), the host 320 may send an acknowledgment packet to the network interface card 313 for each packet, send an acknowledgment packet to the network interface card 313 for a plurality of consecutive packets of a same piece of data, or send an acknowledgment packet to the network interface card 313 for a tail packet of the packets. In addition, regardless of whether the data is the short message or the long message, the host 320 may send an acknowledgment packet for a plurality of previously received packets. For example, an acknowledgment packet of an RDMA write message whose packet sequence number (packet sequence number, PSN) is X may be used to determine that a message whose PSN is less than X before the RDMA write message has been successfully received by the host 320.

It may be understood that, to implement the functions in the foregoing embodiments, a host and a network interface card include a corresponding hardware structure and/or software module for performing each function. A person skilled in the art should easily be aware that, in combination with the examples described in embodiments disclosed in this application, units and algorithms steps may be implemented by hardware or a combination of hardware and computer software. Whether a function is performed by hardware or hardware driven by computer software depends on particular applications and design constraints of the technical solutions.

The data migration method provided in this application is described above in detail with reference to FIG. 1 to FIG. 5. A data migration apparatus provided in this application is described below with reference to FIG. 6.

FIG. 6 is a schematic diagram of a structure of a data migration apparatus according to this application. A data migration apparatus 600 may be configured to implement a function of a host or a network interface card in the foregoing method embodiments. Therefore, beneficial effects of the foregoing method embodiments can also be implemented. In this embodiment of this application, the data migration apparatus 600 may be the network interface card 250 shown in FIG. 2, may be the network interface card 313 or the network interface card 323 shown in FIG. 3 to FIG. 5, or may be a module (for example, a chip) used in a network interface card.

As shown in FIG. 6, the data migration apparatus 600 includes a communication unit 610, a data identification unit 620, a migration unit 630, and a storage unit 640. The data migration apparatus 600 is configured to implement a function of the network interface card in the method embodiments shown in FIG. 3 to FIG. 5. In a possible example, a specific process in which the data migration apparatus 600 is configured to implement the foregoing data migration method includes the following content 1 to 3.
1. The communication unit 610 is configured to obtain a data migration notification message. The first data migration notification message indicates an identifier of a to-be-migrated virtual machine.
2. The data identification unit 620 is configured to determine to-be-migrated data based on the identifier, where the to-be-migrated data is data that is stored in a memory of a source host and that is associated with the to-be-migrated virtual machine.

For example, the data identification unit 620 may determine, based on the foregoing identifier, a memory page set that is in the memory of the source host and that is associated with the to-be-migrated virtual machine, and use, as the to-be-migrated data, data stored in the memory page set.

In addition, as shown in FIG. 6, the storage unit 640 included in the data migration apparatus 600 is configured to store dirty page mark information. The data identification unit 620 may determine, based on the identifier of the to-be-migrated virtual machine in the data migration notification message and the dirty page mark information, a dirty page that is in the memory of the source host and that is associated with the to-be-migrated virtual machine, to determine dirty page data stored in the associated dirty page. For more detailed content of the dirty page mark information, refer to related descriptions in Table 1 in the foregoing method embodiment. Details are not described herein again.

3. The migration unit 630 is configured to migrate the foregoing to-be-migrated data to a destination host.

The to-be-migrated data is determined by the data identification unit based on the identifier of the to-be-migrated virtual machine. This avoids a process in which the source host determines the to-be-migrated data of the virtual machine, reduces a computing resource required by the source host in a live migration process of the virtual machine, and improves a capability of performing another service (for example, compute-intensive and latency-sensitive services such as AI and HPC) by the source host.

When the data migration apparatus 600 is configured to implement a function of the host 310 in the method embodiment shown in FIG. 3, the communication unit 610 is configured to perform S310, the data identification unit 620 is configured to perform S320, and the migration unit 630 is configured to perform S330.

When the data migration apparatus 600 is configured to implement a function of the host 320 in the method embodiment shown in FIG. 3, the communication unit 610 is configured to perform S330, and the migration unit 630 is configured to perform S340.

When the data migration apparatus 600 is configured to implement a function of the host 310 in the method embodiment shown in FIG. 4, the communication unit 610 is configured to perform S410, and the migration unit 630 is configured to perform S430.

When the data migration apparatus 600 is configured to implement a function of the host 320 in the method embodiment shown in FIG. 4, the communication unit 610 is configured to perform S410 to S430.

In addition, when the data migration apparatus 600 is deployed on a receive-side host (for example, a destination host in a migration process of a virtual machine), the communication unit 610 may be configured to receive data that is of a virtual machine and that is sent by another host, and the migration unit 630 may migrate the data of the virtual machine to memory address space to which SG information in a receive queue is mapped. This avoids copying the data of the virtual machine for a plurality of times by the data migration apparatus 600 on the receive-side host, reduces consumption of a computing resource and a storage resource of the destination host, and improves efficiency of live migration of the virtual machine and a processing capability of executing another computing service by the destination host.

It should be understood that the data migration apparatus 600 in this embodiment of the present invention may be implemented by using a CPU, may be implemented by using an ASIC, or may be implemented by using a programmable logic device (programmable logic device, PLD). The PLD may be a complex program logic device (complex programmable logic device, CPLD), an FPGA, a generic array logic (generic array logic, GAL), or any combination thereof. When the data migration apparatus 600 implements, by using software, the data migration method shown in any one of FIG. 3 to FIG. 5, the data migration apparatus 600 and modules of the data migration apparatus 600 may alternatively be software modules.

For more detailed descriptions of the data migration apparatus 600, directly refer to related descriptions in embodiments shown in FIG. 3 to FIG. 5. Details are not described herein again.

For example, when the data migration apparatus 600 is implemented by using hardware, the hardware may be an electronic device such as the foregoing network interface card, or a processor or a chip used in the network interface card. For example, the electronic device includes an interface circuit and a control circuit.

The interface circuit is configured to receive a signal from a device other than the electronic device and transmit the signal to the control circuit, or send a signal from the control circuit to a device other than the electronic device.

The control circuit is configured to implement the method in any one of the implementations in the foregoing embodiments through a logic circuit or by executing code instructions. For beneficial effects, refer to descriptions in any one of the foregoing embodiments. Details are not described herein again.

It should be understood that the network interface card according to this embodiment of this application may correspond to the data migration apparatus 600 in this embodiment of this application, and may correspond to a corresponding primary body performing the methods in FIG. 3 to FIG. 5 according to embodiments of this application. In addition, the foregoing and other operations and/or functions of the modules in the data migration apparatus 600 are respectively for implementing corresponding processes of the methods in FIG. 3 to FIG. 5. For brevity, details are not described herein again.

It may be understood that the processor in embodiments of this application may be a CPU, an NPU, or a GPU, or may be another general-purpose processor, a DSP, an ASIC, an FPGA or another programmable logic device, a transistor logic device, a hardware component, or any combination thereof. The general purpose processor may be a microprocessor or any regular processor or the like.

The method steps in embodiments of this application may be implemented in a hardware manner, or may be implemented in a manner of executing software instructions by the processor. The software instructions may include corresponding software modules, and the software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in the network device or the terminal device. Certainly, the processor and the storage medium may exist in network equipment as discrete components.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer program or instructions are loaded and executed on a computer, the procedure or functions according to embodiments of this application are all or partially implemented. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, such as a floppy disk, a hard disk, or a magnetic tape, may be an optical medium, such as a digital video disc (digital video disc, DVD), or may be a semiconductor medium, for example, a solid state drive (solid state drive, SSD).

In embodiments of this application, if there is no special description or logic conflict, terms and/or descriptions between different embodiments are consistent and may be mutually referenced, and technical features in different embodiments may be combined to form a new embodiment based on an internal logical relationship of the different embodiments. Numerals used in embodiments of this application are merely used for differentiation for ease of description, but do not limit the scope of embodiments of this application. Sequence numbers of the foregoing processes do not mean execution sequences. The execution sequences of the processes should be determined according to functions and internal logic of the processes.

## Claims

1. A data migration method, wherein the method is performed by a network interface card of a source host, and the method comprises:
obtaining a first data migration notification message, wherein the first data migration notification message indicates an identifier of a to-be-migrated virtual machine;
determining to-be-migrated data based on the identifier, wherein the to-be-migrated data is data that is stored in a memory of the source host and that is associated with the to-be-migrated virtual machine; and
migrating the to-be-migrated data to a destination host.

2. The method according to claim 1, wherein
the determining to-be-migrated data based on the identifier comprises:
determining, based on the identifier, a memory page set that is in the memory of the source host and that is associated with the to-be-migrated virtual machine, wherein the memory page set comprises one or more memory pages; and
using, as the to-be-migrated data, data stored in the memory page set.

3. The method according to claim 2, wherein the to-be-migrated data comprises dirty page data, and the dirty page data is data stored in a memory page that is in the one or more memory pages and in which data is modified.

4. The method according to claim 3, wherein
the determining, based on the identifier, dirty page data comprised in the to-be-migrated data comprises:
querying dirty page mark information stored in the network interface card, to determine a dirty page set associated with the identifier, wherein the dirty page set comprises one or more dirty pages, the dirty page is the memory page that is in the one or more memory pages and in which the data is modified, and the dirty page mark information indicates a memory address of the dirty page; and
using, as the dirty page data, data stored in the dirty page set.

5. The method according to claim 4, wherein
the dirty page mark information comprises at least one of a first dirty page table and a second dirty page table;
the first dirty page table is for marking the dirty page as a dirty mark state, and the dirty mark state is a state in which the source host modifies data stored in the dirty page; and
the second dirty page table is for marking the dirty page as a data migration state, and the data migration state is a state in which the network interface card migrates the data stored in the dirty page.

6. The method according to any one of claims 3 to 5, wherein
the migrating the to-be-migrated data to a destination host comprises:
sending page information of the to-be-migrated data to the destination host, wherein the page information indicates a memory address and an offset of the to-be-migrated data in the memory;
receiving a migration message fed back by the destination host based on the page information, wherein the migration message indicates a receive queue RQ that is in the destination host and that corresponds to the to-be-migrated virtual machine; and
sending the to-be-migrated data to the RQ indicated by the migration message.

7. The method according to claim 6, wherein a send queue SQ in the network interface card maintains SG information comprising the memory address and an offset of the dirty page, and the page information comprises the SG information corresponding to the dirty page.

8. The method according to claim 7, wherein
the sending the to-be-migrated data to the RQ indicated by the migration message comprises:
obtaining, from the SQ, the SG information corresponding to the dirty page; and
sending, to the RQ indicated by the migration message, data indicated by the SG information.

9. The method according to claim 6, wherein the source host establishes a control connection and a data connection to the destination host by using a transmission control protocol/internet protocol TCP/IP, wherein the control connection is for transmitting the page information and the migration message, and the data connection is for transmitting the to-be-migrated data.

10. The method according to claim 6, wherein the source host establishes a single connection to the destination host by using TCP/IP, and the single connection is for transmitting the page information, the migration message, and the to-be-migrated data.

11. The method according to claim 10, wherein
the migration message is a message processing identifier ID allocated by the destination host to the to-be-migrated virtual machine.

12. The method according to claim 6, wherein the source host communicates with the destination host via a remote direct memory access RDMA network, the network interface card stores a memory protection table MPT, the MPT table indicates a correspondence between a host physical address HPA of the memory and a guest physical address GPA of the to-be-migrated virtual machine, and the MPT table comprises physical function PF information used by the to-be-migrated virtual machine; and
the sending the to-be-migrated data to the RQ indicated by the migration message comprises:
determining PF information of the to-be-migrated virtual machine based on migration information;
querying the MPT table based on the PF information and the GPA of the to-be-migrated virtual machine, to determine the HPA corresponding to the page information; and
sending, to the destination host, the to-be-migrated data stored in the HPA of the to-be-migrated virtual machine.

13. The method according to claim 1, wherein the method further comprises:
obtaining a second data migration notification message, wherein the second data migration notification message indicates an identifier of a to-be-received virtual machine; and
migrating, to the memory of the source host, to-be-received data sent by another host, wherein the to-be-received data is data that is stored in a memory of the another host and that is associated with the to-be-received virtual machine.

14. A data migration apparatus, wherein the data migration apparatus is used in a network interface card of a source host, and the data migration apparatus comprises:
a communication unit, configured to obtain a first data migration notification message, wherein the first data migration notification message indicates an identifier of a to-be-migrated virtual machine;
a data identification unit, configured to determine to-be-migrated data based on the identifier, wherein the to-be-migrated data is data that is stored in a memory of the source host and that is associated with the to-be-migrated virtual machine; and
a migration unit, configured to migrate the to-be-migrated data to a destination host.

15. An electronic device, comprising an interface circuit and a control circuit, wherein
the interface circuit is configured to receive a signal from a device other than the electronic device and transmit the signal to the control circuit, or send a signal from the control circuit to a device other than the electronic device, wherein the control circuit is configured to implement the method according to any one of claims 1 to 13 through a logic circuit or by executing code instructions.
